# EUROPÄISCHE PATENTSCHRIFT

(11) **EP 1 242 265 B1**
(45) Veröffentlichungstag und Bekanntmachung des Hinweises auf die Patenterteilung: **09.11.2005**
(21) Anmeldenummer: 00990580.3
(22) Anmeldetag: 21.12.2000
(51) Int. Cl.: B60R 13/00

(54) **HALTEVORRICHTUNG FÜR EINE ZIERFIGUR EINES KRAFTFAHRZEUGES**
HOLDING DEVICE FOR A RADIATOR MASCOT OF A MOTOR VEHICLE
DISPOSITIF DE MAINTIEN POUR UN ELEMENT DECORATIF D'UN VEHICULE AUTOMOBILE

(30) Priorität: 29.12.1999 DE 19963695; 29.01.2000 DE 10003917
(43) Veröffentlichungstag der Anmeldung: 25.09.2002
(73) Patentinhaber: Böhm, Steffen, 55543 Bad Kreuznach (DE)
(72) Erfinder: Böhm, Steffen, 55543 Bad Kreuznach (DE)
(74) Vertreter: Becker, Bernd
(86) Internationale Anmeldenummer: PCT/DE2000/004625
(87) Internationale Veröffentlichungsnummer: WO 2001/049530

(56) Entgegenhaltungen:
- EP-A- 0 438 089
- EP-A- 0 563 634
- DE-A- 4 009 206
- US-A- 5 376 415

## Beschreibung

Die Erfindung bezieht sich auf eine Haltevorrichtung für eine Zierfigur eines Kraftfahrzeuges mit einer Grundplatte, die unter Zwischenlage eines Karosserieteils mittels eines Halteelementes befestigt ist, und einer dazu beweglichen Trägerplatte für die Zierfigur, wobei die Trägerplatte durch eine Zugfeder in Richtung der Grundplatte beaufschlagt ist.

Die EP 0 117 840 A2 offenbart eine Haltevorrichtung zur Befestigung eines Publikationsträgers an einem Karosserieteil eines Kraftfahrzeuges. Die Haltevorrichtung umfasst einen Rahmen für den drehbar einer Befestigungseinrichtung zugeordneten Publikationsträger. Zur drehbaren Lagerung des Publikationsträgers weist der Rahmen einen Kopf auf, der in einer Pfanne eines Sockels der Befestigungseinrichtung gelagert ist. Die Befestigungseinrichtung befindet sich oberhalb des Karosserieteils und ist mit einer unterseitigen Mutter befestigt. Der Kopf ist über eine Zugfeder in der Pfanne gehalten, wobei eine Federöse der Zugfeder am Kopf und eine Federöse an einem Haltesteg unterhalb der Mutter festgelegt ist. Ein selbsttätiges Lösen des Rahmens unter erhöhter Krafteinwirkung, was beispielsweise durch den Aufprall einer Person auf die betreffende Stelle des Kraftfahrzeugs erfolgt, ist nicht vorgesehen. Bei einem derartigen Personenunfall verschwenkt zwar der Publikationsträger mit dem Rahmen, jedoch stehen diese Teile weiterhin über das Karosserieteil vor und können insoweit zu erheblichen Verletzungen führen.

Im Weiteren ist aus der DE 40 09 206 C2 eine Haltevorrichtung für eine Zierfigur eines Kraftfahrzeuges bekannt, die aus dem Profil des Kraftfahrzeuges herausragend angeordnet ist. Die Haltevorrichtung umfasst ein am Kraftfahrzeug befestigtes Halteteil, mit dem ein Sockelteil der Zierfigur geradlinig verschiebbar gleitend verbindbar ist. Das Halteteil weist eine in Längsrichtung des Kraftfahrzeuges verlaufende Führungsnut auf, in der das Sockelteil mit einer Haltekraft gehalten ist, bei deren Überwindung im Fall eines Aufpralls eines Gegenstandes auf die Zierfigur sich diese in Verschieberichtung bewegt. Die Haltekraft wird mittels federbelasteter Rastelemente erzeugt, die der Zierfigur zugeordnet sind, wobei die Rastelemente mit dem Halteteil zusammenwirken. Die Haltevorrichtung erweist sich insoweit als nachteilig, als die Zierfigur lediglich bei horizontal einwirkenden Kräften zurückweicht, indem sie in der Führungsnut verschoben wird. Bei schräg einwirkenden Kräften wird die Zierfigur um ihre Achse gedreht und weicht anschließend nach hinten aus.

Darüberhinaus offenbart die DE 25 22 121 A1, die den nächstliegenden Stand der Technik darstellt und gattungsbildend für den Oberbegriff des Anspruchs 1 ist, eine Haltevorrichtung für ein von der Außenhaut eines Kraftfahrzeuges abragendes flaches Bauteil, insbesondere für ein Firmenlogo oder eine Zierfigur. Die Haltevorrichtung umfasst eine in Richtung des Bauteil geöffnete, kugelförmig ausgebildete Lagerpfanne sowie einen durch Federkraft in die Lagerpfanne gespannten und mit dem Bauteil verbundenen Gelenkkörper. Der Gelenkkörper ist schwenkbar gelagert und wird in seiner Normallage durch Rastnasen stabilisiert. An der Unterseite des Bauteils ist innerhalb des Gelenkkörpers eine Öse ausgebildet, in die ein Ende einer Zugfeder eingehängt ist, deren anderes Ende in einen bügelartigen Halter eingehängt ist, der sich unterhalb eines Karosserieteils befindet.

Ferner ist aus der DE 36 17 699 C2 eine Haltevorrichtung für eine Zierfigur eines Kraftfahrzeuges bekannt, die aus dem Profil der Kühlerhaube herausragend angeordnet ist. Die Haltevorrichtung umfasst eine auf der Kühlerhaube zu befestigende Sockelplatte, die eine Aufnahmebohrung sowie eine mit der Zierfigur fest verbundene Fußplatte aufweist. An der Fußplatte greift ein Zugorgan an, das durch die Aufnahmebohrung der Sockelplatte und eine Ausnehmung in der Kühlerhaube nach unten absteht. Das Zugorgan ist um seine Längsachse drehbar und mit einer Stützfeder gegen die Sockelplatte vorgespannt. Beim Aufprall eines Gegenstandes auf die Zierfigur wird diese verdreht. Ein Verschwenken der Zierfigur oder gar ein selbsttätiges Lösen derselben ist nicht möglich.

Es ist Aufgabe der Erfindung, eine Haltevorrichtung für eine Zierfigur eines Kraftfahrzeuges der eingangs genannten Art zu schaffen, die bei einem einfachen und robusten Aufbau ein Verletzungsrisiko für eine Person bei einem Unfall minimiert.

Erfindungsgemäß wird die Aufgabe dadurch gelöst, dass die Zugfeder zum einen unter hoher Krafteinwirkung selbsttätig lösbar an der Trägerplatte und zum anderen an dem Halteelement unter Vorspannung befestigt ist.

Aufgrund dieser Maßnahmen ist sichergestellt, dass einerseits sich die Trägerplatte mit der Zierfigur unter einer relativ geringen Krafteinwirkung zu der Grundplatte bewegt, da sie lediglich mittels der vorgespannten Zugfeder in Richtung der Grundplatte beaufschlagt ist, und andererseits sich die Zugfeder unter einer relativ hohen Krafteinwirkung selbsttätig von der Tragerplatte löst, wodurch die Trägerplatte mit der Zierfigur nicht mehr mit der Grundplatte verbunden ist. Wird die Zierfigur beispielsweise mittels Handkraft, also unter einer geringen Krafteinwirkung, verschwenkt oder verdreht, bleibt die Verbindung zwischen der Trägerplatte und der Zugfeder und somit auch der Grundplatte bestehen und die Zierfigur kann nicht entfernt werden. Trifft demgegenüber beispielsweise der Körper einer Person bei einem Unfall mit verhältnismäßig großer Geschwindigkeit auf die Zierfigur, so steht diese unter einer hohen Krafteinwirkung, wodurch sich die Zugfeder selbsttätig von der Trägerplatte löst. Die Trägerplatte und die Zierfigur entfernen sich sonach von dem die Grundplatte halternden Karosserieteil, was zu einer äußerst geringen Verletzungsgefahr für eine Person bei einem solchen Unfall durch die Zierfigur führt.

Nach einer vorteilhaften Ausgestaltung der Erfindung ist in die Trägerplatte ein Innengewinde zur Aufnahme des zugeordneten Endes der Zugfeder eingelassen. Die Gewindesteigung entspricht im Wesentlichen der Steigung des Federdrahtes der Zugfeder und der Federdraht liegt zwischen den Gewindeflanken des Innengewindes ein. Unter einer hohen Krafteinwirkung dehnt sich die Zugfeder. Mit der Dehnung der Zugfeder tritt gleichzeitig eine Verjüngung des Durchmessers der Zugfeder im Bereich des Innengewindes ein, so dass die Zugfeder aus dem Innengewinde herausrutscht. Beispielsweise kann das Innengewinde als M 12 Gewinde mit einem Kerndurchmesser von ca. 10,6 mm ausgeführt sein und die Zugfeder einen Außendurchmesser von ca. 11 mm aufweisen. Wird nun die Zierfigur mit einer erhöhten Kraft von ca. 1 N beaufschlagt, dann dehnt sich die Zugfeder in ihrer Längsorientierung auf ca. das 4 bis 5-fache ihrer Ursprungslänge und der Außendurchmesser der Zugfeder reduziert sich hierbei auf ca. 10,5 mm. Sonach kann die Zugfeder aus dem Innengewinde der Trägerplatte herausgleiten. Selbstverständlich sind die zuvor genannten Dimensionierungen keinesfalls zwingend für die Funktion der Haltevorrichtung und können den jeweiligen Anforderungen entsprechend verändert werden.

Vorteilhafterweise ist die Trägerplatte mit der Zierfigur verschraubt und ein in Richtung der Zierfigur ausgerichteter Fortsatz der Zugfeder taucht in ein unterseitiges Sackloch der Zierfigur ein. Bei der Montage wird die Zugfeder in das Innengewinde der Trägerplatte eingedreht, bis ihr Fortsatz über die Oberkante der Trägerplatte hervorsteht und sich in einer bestimmten Position zu dem Sackloch der Zierfigur befindet. Anschließend wird die Zierfigur auf die Trägerplatte aufgesetzt, wobei der Fortsatz der Zugfeder in das Sackloch eintaucht, und die Zierfigur mit der Trägerplatte verschraubt. Da der Fortsatz in dem Sackloch gehalten ist, ist ein Herausdrehen der Zugfeder aus dem Innengewinde der Trägerplatte nicht möglich.

Um eine allseitige Schwenkbewegung sowie eine beidseitige Drehbewegung der Trägerplatte mit der Zierfigur relativ zur Grundplatte und entgegen der Wirkung der Zugfeder mit einfachen Mitteln sicherzustellen, umfasst zweckmäßigerweise die Trägerplatte einen auf ihrer Unterseite angeformten Kegelstumpf, der sich nach unten verjüngt und in eine korrespondierende Ausnehmung der Grundplatte eintaucht. Gleichzeitig ist die Trägerplatte durch ihren Kegelstumpf in der entsprechenden Ausnehmung der Grundplatte zentriert.

Bevorzugt weist die Trägerplatte zumindest zwei unterseitige Rastbohrungen auf, in die korrespondierende Rastnasen der Grundplatte eintauchen. Durch das Zusammenwirken der Rastbohrungen und der Rastnasen ist eine exakte Ausrichtung der Zierfigur gewährleistet.

Um die Zugfeder vor Beschädigungen zu schützen, eine bestimmte Federlänge zu ermöglichen und gleichzeitig eine relativ einfache Montage der Grundplatte auf dem Karosserieteil zu erzielen, ist zweckmäßigerweise das Halteelement als Federspannrohr ausgebildet und mit der Grundplatte verschraubt. Hierzu ist bevorzugt das Federspannrohr einseitig mit einem Innengewinde versehen und die Grundplatte trägt einen unterseitigen rohrförmigen Gewindeansatz. Der Gewindeansatz wird in eine entsprechende Bohrung des Karosserieteils eingesetzt und die Grundplatte durch Aufschrauben des Federspannrohrs an dem Karosserieteil festgelegt. Weiterhin ist zweckmäßigerweise in die Grundplatte eine zu dem Federspannrohr korrespondierende Bohrung eingelassen und die Zugfeder durchragt sowohl das Federspannrohr als auch die Bohrung der Grundplatte mit Spiel. Somit ist die Zugfeder auf ihrer gesamten Länge vor Beschädigungen geschützt. Eine gegebenenfalls erforderliche Längenänderung der Zugfeder geht mit einer entsprechenden Längenänderung des Federspannrohrs einher und die übrigen Bauteile der Haltevorrichtung bleiben unverändert.

Zur Bereitstellung einer zweckmäßigen Befestigungsmöglichkeit für die Zugfeder weist das Federspannrohr an seinem freien Ende zwei gegenüberliegende Ausnehmungen zur Aufnahme eines Sicherungsbolzens für die Zugfeder auf.

Vorteilhafterweise durchragt der Sicherungsbolzen eine Federöse der Zugfeder und weist jeweils endseitig eine Schulter auf, die am Außendurchmesser des Federspannrohrs anliegen. Unter der Vorspannung der Zugfeder kann der Sicherungsbolzen nicht aus den Ausnehmungen herausgleiten.

Bevorzugt ist die Zugfeder im Bereich ihres die Federöse aufweisenden Endes konisch ausgeführt, wobei sie sich in Richtung der Federöse verjüngt. Somit ist das Eindrehen der Zugfeder in das Innengewinde der Trägerplatte relativ leicht zu bewerkstelligen, da sie unter relativ geringer Reibung einfach mit der Federöse von der Oberseite der Trägerplatte in die Bohrung des Innengewindes eingesetzt wird. Mit zunehmendem Durchschrauben erhöht sich die Reibung zwischen der Zugfeder und dem Innengewinde. Nach einigen Umdrehungen bleibt die Reibung im zylindrischen Bereich der Zugfeder konstant. In ihrer Endlage ist die Zugfeder durch den senkrechten Fortsatz begrenzt, der das Ende des gewindeartig gewickelten Federdrahtes bildet und einen erhöhten Widerstand gegen eine weitere Verdrehung der Zugfeder darstellt.

Damit der Lack des Karosserieteils vor Beschädigung durch die Grundplatte geschützt ist, trägt die Grundplatte auf ihrer Unterseite ein kunststoffbeschichtetes Klebeband. Darüberhinaus wird durch die Kunststoffbeschichtung eine elektrochemische Korrosion im Auflagebereich der Grundplatte verhindert.

Es versteht sich, dass die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

Die Erfindung wird im folgenden anhand eines Ausführungsbeispieles unter Bezugnahme auf die zugehörigen Zeichnungen näher erläutert. Es zeigen:

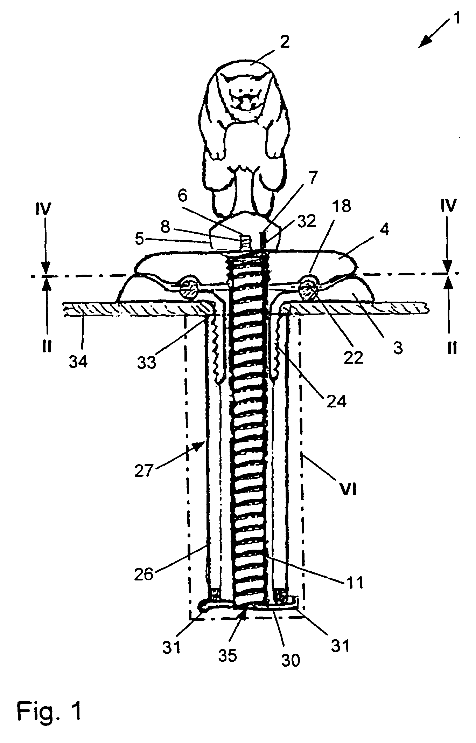

- Fig.1: eine Vorderansicht einer erfindungsgemäßen Haltevorrichtung für eine Zierfigur, teilweise im Schnitt,

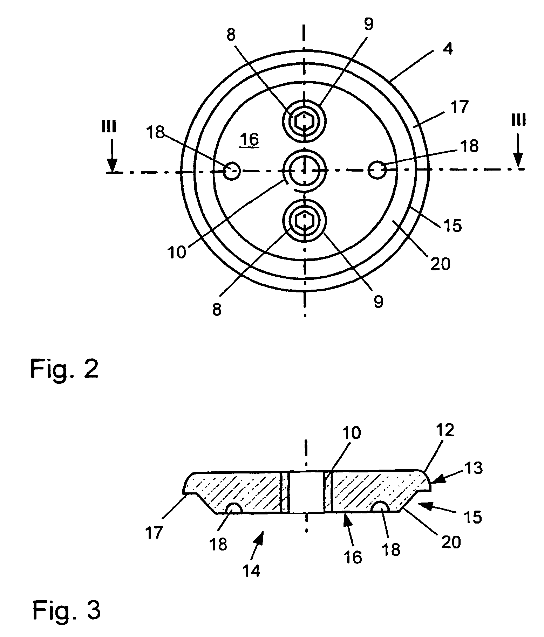

- Fig.2: eine Ansicht auf die Darstellung nach Fig. 1 gemäß der Linie II-II,
- Fig.3: einen Schnitt durch die Darstellung nach Fig. 2 gemäß der Linie III-III,

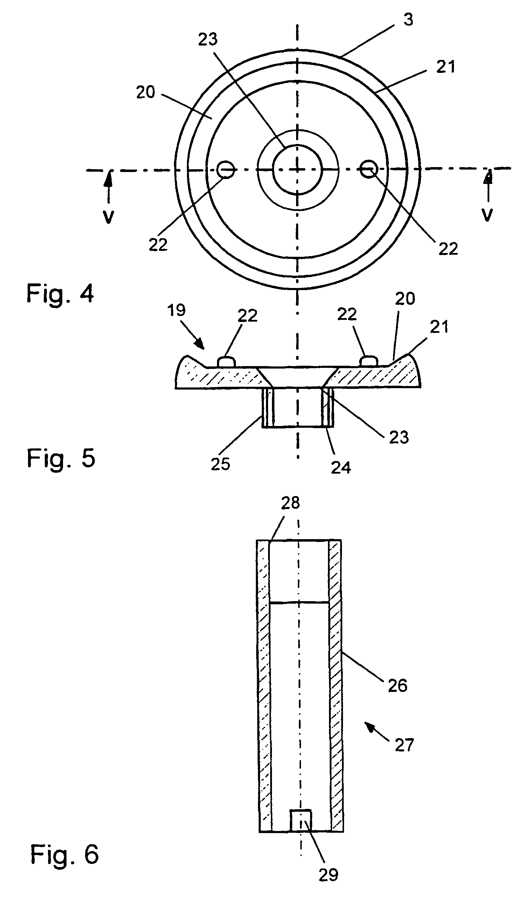

- Fig.4: eine Ansicht auf die Darstellung nach Fig. 1 gemäß der Linie IV-IV,
- Fig.5: einen Schnitt durch die Darstellung nach Fig. 4 gemäß Linie V-V und
- Fig.6: eine Darstellung einer Einzelheit VI gemäß Fig. 1.

Eine Haltevorrichtung 1 für eine Zierfigur 2 umfasst eine zylindrische Grundplatte 3 und eine dazu bewegliche, ebenfalls zylindrische Trägerplatte 4 für die Zierfigur 2. Die Zierfigur 2 weist eine Sockelplatte 5 mit Gewindebohrungen 6 sowie einem Sackloch 7 auf. In die Gewindebohrungen 6 greifen zur Befestigung der Zierfigur 2 auf der Trägerplatte 4 Schrauben 8 ein, wobei die Köpfe der Schrauben 8 in entsprechende Senkungen 9 der Trägerplatte 4 eingesetzt sind.

In das Zentrum der Trägerplatte 4 ist ein Innengewinde 10 zur Aufnahme einer Zugfeder 11 geschnitten. Die in Richtung der Zierfigur 2 weisende umlaufende Außenkante 12 der Trägerplatte 4 ist zur Vermeidung einer Schnittkante mit einem Radius 13 versehen. Auf der der Zierfigur 2 entgegengesetzten Unterseite 14 der Trägerplatte 4 ist ein Kegelstumpf 15 angeformt, dessen kleine Stirnfläche 16 ins Freie ragt. Der größte Durchmesser des Kegelstumpfs 15 ist kleiner als der Außendurchmesser der Trägerplatte 4, weshalb unterseitig eine umlaufende Schulter 17 ausgebildet ist. Auf der Unterseite 14 der Trägerplatte 4 sind in die kleine Stirnfläche 16 des Kegelstumpfs 15 zwei zueinander beabstandete Rastbohrungen 18 eingelassen, die im wesentlichen um 90° versetzt zu den Senkungen 9 fur die Köpfe der Schrauben 8 ausgerichtet sind.

Der Kegelstumpf 15 der Trägerplatte 4 ist in eine korrespondierende Ausnehmung 19 der Grundplatte 3 eingesetzt, wobei die Trägerplatte 4 und die Grundplatte 3 über die Umfangsflächen 20 von Kegelstumpf 15 bzw. Ausnehmung 19 zentriert sind. Hierbei liegt die Schulter 17 der Trägerplatte 4 auf einer abgerundeten Oberkante 21 der Grundplatte 3 auf und zwischen den Umfangsflächen 20 von Kegelstumpf 15 bzw. Ausnehmung 19 ist ein geringes Spiel vorhanden. In der Ausnehmung 19 der Grundplatte 3 sind zwei zu den Rastbohrungen 18 der Trägerplatte 4 korrespondierende Rastnasen 22 angeordnet, die in dieselben eintauchen. Im Zentrum der Grundplatte 3 ist eine angefaste Bohrung 23 vorgesehen, die sich in einen koaxialen rohrförmigen Gewindeansatz 24 mit einem Außengewinde 25 erstreckt.

Auf den Gewindeansatz 24 der Grundplatte 3 wird unter Zwischenlage eines Karosserieteils 34 ein als Federspannrohr 26 ausgebildetes Halteelement 27 mit einem entsprechenden Innengewinde 28 aufgeschraubt. Das Federspannrohr 26 weist an seinem freien Ende zwei gegenüberliegende Aussparungen 29 zur Aufnahme eines Sicherungsbolzens 30 für die Zugfeder 11 auf, wobei der Sicherungsbolzen 30 jeweils endseitig mit einer Schulter 31 versehen ist, die am Außendurchmesser des Federspannrohrs 26 anliegen.

Vor der Montage der Zierfigur 2 auf der Trägerplatte 4 wird die Zugfeder 11 in das Innengewinde 10 gedreht, bis ein in Richtung der Zierfigur 2 ausgerichteter Fortsatz 32 der Zugfeder 11 über die Trägerplatte 4 hervorsteht, wobei der Fortsatz 32 durch Drehen der Zugfeder 11 derart ausgerichtet wird, dass er in etwa eine zum Sackloch 7 der Zierfigur 2 ausgerichtete Lage einnimmt. Das Eindrehen der Zugfeder 11 in das Innengewinde 10 der Trägerplatte 4 ist dadurch erleichtert, dass das die Federöse 35 aufweisende Ende der Zugfeder 11 bereichsweise konisch ausgeführt ist. Die Zugfeder 11 verjüngt sich in diesem Endbereich in Richtung der Federöse 35. Bei der Montage wird die Federöse 35 zuerst von der Oberseite der Trägerplatte 4 in das Innengewinde 10 eingesetzt und anschließend einige Umdrehungen unter zunehmender Krafteinwirkung in das Innengewinde 10 geschraubt. Im zylindrischen Bereich der Zugfeder 11, der sich an den konischen Bereich anschließt ist die Einschraubkraft konstant. Die gewindeartige Steigung des Federdrahtes der Zugfeder 11 wird durch den abstehenden Fortsatz 34 beendet, und die Zugfeder 11 lässt sich hier nur noch unter erheblicher Krafteinwirkung, die zur Verformung der Zugfeder 11 erforderlich ist, weiter drehen. Somit ist durch das Ende der gewindeartigen Steigung die ungefähre Position des Fortsatzes 34 festgelegt.

Nach dem Aufschrauben der Zierfigur 2 auf die Trägerplatte 4 taucht der Fortsatz 32 in das Sackloch 7 ein und ein weiteres Verdrehen der Zugfeder 11 ist nicht mehr möglich. Im Weiteren wird der Gewindeansatz 24 der Grundplatte 3 in eine entsprechende Bohrung 33 des Karosserieteils 34 eingesetzt und das Federspannrohr 26 gegengeschraubt, wobei die beiden Rastnasen 22 ausgerichtet werden. Anschließend wird die Trägerplatte 4 mit der Zierfigur 2 und der Zugfeder 11 auf die Grundplatte 3 aufgesetzt. Hierbei wird die Zugfeder 11 durch die Bohrung 23 und den rohrförmigen Gewindeansatz 24 sowie das Federspannrohr 26 geführt. Das mit einer Federöse 35 versehene freie Ende der Zugfeder 11 wird über das Federspannrohr 26 hinausgezogen und der Sicherungsbolzen 30 in die Federöse 35 eingesetzt. Nach dem Loslassen der Zugfeder 11 gelangt der Sicherungsbolzen 30 in die Aussparungen 29 des Federspannrohrs 26 und die unter Vorspannung stehende Zugfeder 11 zieht die Trägerplatte 4 in Richtung der Grundplatte 3.

Unter einer geringen Krafteinwirkung aus einer bestimmten Richtung verschwenkt die Trägerplatte 4 mit der Zierfigur 2 entgegen der Wirkung der Zugfeder 11. Bei dieser Schwenkbewegung gelangen die Rastbohrungen 18 in einen Bereich oberhalb der Rastnasen 22 und die Zierfigur 2 ist verdrehbar. Bei einer hohen Krafteinwirkung erfährt die Zugfeder 11 aufgrund der Schwenkbewegung der Trägerplatte 4 mit der Zierfigur 2 eine derartige Dehnung, mit der gleichzeitig eine Reduzierung des Außendurchmessers der Zugfeder 11 einhergeht, dass diese aus dem Innengewinde 11 der Trägerplatte 4 herausgleitet und die Trägerplatte 4 mit der Zierfigur 2 von der Grundplatte 3 getrennt ist.

## Patentansprüche

1. Haltevorrichtung für eine Zierfigur (2) eines Kraftfahrzeuges mit einer Grundplatte (3), die unter Zwischenlage eines Karosserieteils (34) mittels eines Halteelementes (27) befestigt ist und einer dazu beweglichen Trägerplatte (4) für die Zierfigur (2), wobei die Trägerplatte (4) durch eine Zugfeder (11) in Richtung der Grundplatte (3) beaufschlagt ist, **dadurch gekennzeichnet, dass** die Zugfeder (11) zum einen unter hoher Krafteinwirkung selbsttätig lösbar an der Trägerplatte (4) und zum anderen an dem Halteelement (27) unter Vorspannung befestigt ist.

2. Haltevorrichtung nach Anspruch 1, **dadurch gekennzeichnet, dass** in die Trägerplatte (4) ein Innengewinde (10) zur Aufnahme des zugeordneten Endes der Zugfeder (11) eingelassen ist.

3. Haltevorrichtung nach Anspruch 1 oder 2, **dadurch gekennzeichnet, dass** die Trägerplatte (4) mit der Zierfigur (2) verschraubt ist und ein in Richtung der Zierfigur (2) ausgerichteter Fortsatz (32) der Zugfeder (11) in ein unterseitiges Sackloch (7) der Zierfigur (2) eintaucht.

4. Haltevorrichtung nach einem der Ansprüche 1 bis 3, **dadurch gekennzeichnet, dass** die Trägerplatte (4) einen auf ihrer Unterseite (14) angeformten Kegelstumpf (15) umfasst, der sich nach unten verjüngt und in eine korrespondierende Ausnehmung (19) der Grundplatte (3) eintaucht.

5. Haltevorrichtung nach einem der Ansprüche 1 bis 4, **dadurch gekennzeichnet, dass** die Trägerplatte (4) zumindest zwei unterseitige Rastbohrungen (18) aufweist, in die korrespondierende Rastnasen (22) der Grundplatte (3) eintauchen.

6. Haltevorrichtung nach Anspruch 1, **dadurch gekennzeichnet, dass** das Halteelement (27) als Federspannrohr (26) ausgebildet und mit der Grundplatte (3) verschraubt ist.

7. Haltevorrichtung nach Anspruch 6, **dadurch gekennzeichnet, dass** das Federspannrohr (26) einseitig mit einem Innengewinde (28) versehen ist und die Grundplatte (3) einen unterseitigen rohrförmigen Gewindeansatz (24) trägt.

8. Haltevorrichtung nach Anspruch 6 oder 7, **dadurch gekennzeichnet, dass** in die Grundplatte (3) eine zu dem Federspannrohr (26) korrespondierende Bohrung (23) eingelassen ist und die Zugfeder (11) sowohl das Federspannrohr (26) als auch die Bohrung (23) der Grundplatte (3) mit Spiel durchragt.

9. Haltevorrichtung nach einem der Ansprüche 6 bis 8, **dadurch gekennzeichnet, dass** das Federspannrohr (26) an seinem freien Ende zwei gegenüberliegende Aussparungen (29) zur Aufnahme eines Sicherungsbolzens (30) für die Zugfeder (11) aufweist.

10. Haltevorrichtung nach Anspruch 9, **dadurch gekennzeichnet, dass** der Sicherungsbolzen (11) eine Federöse (35) der Zugfeder (11) durchragt und jeweils endseitig eine Schulter (31) aufweist, die am Außendurchmesser des Federspannrohrs (26) anliegen.

11. Haltevorrichtung nach einem der Ansprüche 1 bis 10, **dadurch gekennzeichnet, dass** die Zugfeder (11) im Bereich ihres die Federöse (35) aufweisenden Endes konisch ausgeführt ist, wobei sie sich in Richtung der Federöse (35) verjüngt.

12. Haltevorrichtung nach einem der Ansprüche 1 bis 11, **dadurch gekennzeichnet, dass** die Grundplatte (3) auf ihrer Unterseite ein kunststoffbeschichtetes Klebeband trägt.

## Claims

1. Holding device for a radiator mascot (2) of a motor vehicle, said device comprising a base plate (3), which is secured by means of a holding element (27) with the interposition of a body component (34), and a carrier plate (4) which can be moved in relation thereto, is used for the radiator mascot (2) and is impinged upon in the direction of the base plate (3) by a tension spring (11), **characterised in that** the tension spring (11) is secured firstly to the carrier plate (4) in such a way that it can be detached automatically under the action of high force, and secondly to the holding element (27) under pre-tension.

2. Holding device according to claim 1, **characterised in that** an internal thread (10) for receiving the associated end of the tension spring (11) is let into the carrier plate (4).

3. Holding device according to claim 1 or 2, **characterised in that** the carrier plate (4) is screwed to the radiator mascot (2) and an extension (32) of the tension spring (11), aligned in the direction of the radiator mascot (2), plunges into a blind hole (7) on the underside of the mascot (2).

4. Holding device according to one of claims 1 to 3, **characterised in that** the carrier plate (4) includes, integrally moulded onto its underside (14), a truncated cone which tapers downwards and plunges into a corresponding recess (19) of the base plate (3).

5. Holding device according to one of claims 1 to 4, **characterised in that** the carrier plate (4) has on its underside at least two locking bores (18) into which corresponding locking lugs (22) of the base plate (3) plunge.

6. Holding device according to claim 1, **characterised in that** the holding element (27) is in the form of a spring tension tube (26) and is screwed to the base plate (3).

7. Holding device according to claim 6, **characterised in that** the spring tension tube (26) is provided on one side with an internal thread (28) and the base plate (3) bears a tubular threaded projection (24) on its underside.

8. Holding device according to claim 6 or 7, **characterised in that** a bore (23) corresponding to the spring tension tube (26) is let into the base plate (3) and the tension spring (11) protrudes with play through both the spring tension tube (26) and the bore (23) of the base plate (3).

9. Holding device according to one of claims 6 to 8, **characterised in that** the spring tension tube (26) has at its free end two oppositely located recesses (29) for receiving a fastening bolt (30) for the tension spring (11).

10. Holding device according to claim 9, **characterised in that** the fastening bolt (11) protrudes through an eye (35) in the tension spring (11) and has at each end a shoulder (31) abutting against the outside diameter of the spring tension tube (26).

11. Holding device according to one of claims 1 to 10, **characterised in that** the tension spring (11) is embodied conical in the region of its end which has the spring eye (35), and tapers in the direction of said eye (35).

12. Holding device according to one of claims 1 to 11, **characterised in that** the base plate (33) bears on its underside an adhesive tape coated with plastics material.

## Revendications

1. Dispositif de maintien pour une figurine décorative (2) d'un véhicule, avec une plaque de base (3) fixée au moyen d'un élément de maintien (27) avec interposition d'une partie de carrosserie (34), et avec une plaque porteuse (4), mobile par rapport à la précédente, pour la figurine décorative (2), la plaque porteuse (4) étant sollicitée par un ressort de traction (11) en direction de la plaque de base (3), **caractérisé en ce que** le ressort de traction (11) est fixé, d'une part, à la plaque porteuse (4) de manière automatiquement détachable par l'action d'une force élevée et, d'autre part, sous précontrainte à l'élément de maintien (27).

2. Dispositif de maintien selon la revendication 1, **caractérisé en ce que** dans la plaque porteuse (4) est réalisé un taraudage (10) pour recevoir l'extrémité associée du ressort de traction (11).

3. Dispositif de maintien selon la revendication 1 ou 2, **caractérisé en ce que** la plaque porteuse (4) est vissée à la figurine décorative (2), et un prolongement (32) du ressort de traction (11) orienté en direction de la figurine décorative (2) pénètre dans un trou borgne (7) ménagé dans la sous-face de la figurine décorative (2).

4. Dispositif de maintien selon une des revendications 1 à 3, **caractérisé en ce que** la plaque porteuse (4) comprend une partie tronconique (15) qui fait corps avec sa sous-face (14), qui se rétrécit vers le bas et qui pénètre dans un évidement correspondant (19) de la plaque de base (3).

5. Dispositif de maintien selon une des revendications 1 à 4, **caractérisé en ce que** la plaque porteuse (4) comporte au moins deux trous d'encliquetage en sous-face (18) dans lesquels pénètrent des tétons d'encliquetage correspondants (22) de la plaque de base (3).

6. Dispositif de maintien selon la revendication 1, **caractérisé en ce que** l'élément de maintien (27) est conformé en tube de tension de ressort (26) et est vissé à la plaque de base (3).

7. Dispositif de maintien selon la revendication 6, **caractérisé en ce que** le tube de tension de ressort (26) est pourvu, d'un côté, d'un taraudage (28) et la plaque de base (3) porte en sous-face un appendice tubulaire fileté (24).

8. Dispositif de maintien selon la revendication 6 ou 7, **caractérisé en ce que** dans la plaque de base (3) est réalisé un trou (23) correspondant au tube de tension de ressort (26), et le ressort de traction (11) traverse avec jeu aussi bien le tube de tension de ressort (26) que le trou (23) de la plaque de base (3).

9. Dispositif de maintien selon une des revendications 6 à 8, **caractérisé en ce que** le tube de tension de ressort (26) comporte à son extrémité libre deux évidements opposés (29) pour recevoir un axe de blocage (30) pour le ressort de traction (11).

10. Dispositif de maintien selon la revendication 9, **caractérisé en ce que** l'axe de blocage (30) traverse un oeillet de ressort (35) du ressort de traction (11) et comporte à chaque extrémité un épaulement (31) qui est appliqué contre le diamètre extérieur du tube de tension de ressort (26).

11. Dispositif de maintien selon une des revendications 1 à 10, **caractérisé en ce que** le ressort de traction (11) présente une conformation conique dans la zone de son extrémité pourvue de l'oeillet de ressort (35) et se rétrécit en direction de l'oeillet de ressort (35).

12. Dispositif de maintien selon une des revendications 1 à 11, **caractérisé en ce que** la plaque de base (3) porte, sur sa sous-face, une bande adhésive revêtue de matière plastique.
